Europäisches Patentamt

(19) European Patent Office

Office européen des brevets

(11) Numéro de publication : **0 229 800 B1**

(12) **FASCICULE DE BREVET EUROPEEN**

(45) Date de publication du fascicule du brevet :
27.03.91 Bulletin 91/13

(51) Int. Cl.⁵ : **A01G 3/00**

(21) Numéro de dépôt : **86904201.0**

(22) Date de dépôt : **30.06.86**

(86) Numéro de dépôt international :
**PCT/FR86/00229**

(87) Numéro de publication internationale :
**WO 87/00001 15.01.87 Gazette 87/01**

(54) DISPOSITIF DE COUPE ET DE TRAITEMEMT SIMULTANES D'UNE TIGE DE PLANTE.

(30) Priorité : 04.07.85 FR 8510206
22.10.85 FR 8515636

(43) Date de publication de la demande :
29.07.87 Bulletin 87/31

(45) Mention de la délivrance du brevet :
27.03.91 Bulletin 91/13

(84) Etats contractants désignés :
AT BE CH DE FR GB IT LI LU NL SE

(56) Documents cités :
FR-E- 69 421
US-A- 2 726 484
US-A- 2 870 573

(73) Titulaire : RAVAUX, René
73, Grande Rue
F-91510 Lardy (FR)

(72) Inventeur : RAVAUX, René
73, Grande Rue
F-91510 Lardy (FR)

(74) Mandataire : Flavenot, Bernard
Société ABRITT 17, rue du Docteur Charcot La
Norville
F-91290 Arpajon (FR)

## Description

La présente invention concerne les dispositifs de coupe et de traitement simultanés d'une tige de plante, comme par exemple les ceps ou les sarments de vigne, des branches d'arbres fruitiers ou d'ornement, etc...

Dans l'ensemble des cultures qui donnent naissance à des fruits, il est nécessaire de procéder, à certaines époques, à des coupes. Tel est le cas, par exemple, des arbres fruitiers, de la vigne et autres végétaux du même type. La taille périodique de ces plantes est nécessaire pour leur donner de la vigueur, les protéger contre un développement anarchique, etc...

Pour effectuer ces coupes, il n'existe aucune machine automatique opérante, car il est absolument nécessaire que l'Homme du métier détermine, par son savoir-faire, l'endroit exact où doit être effectuée la coupe. Il utilise pour cela un outil coupant du type sécateur.

Quand on effectue une telle taille, on crée inévitablement une "plaie" de taille sur la plante, qu'il est nécessaire de protéger et/ou traiter de la même façon que pour un être humain.

Quand le nombre de plantes à tailler, puis à traiter suite à la taille, est important, se pose alors un problème. En effet, comme la taille est manuelle et qu'elle ne peut être autrement, elle prend un temps certain et les plaies de taille réalisées peuvent commencer à s'infecter pendant que l'Homme du métier continue et achève son travail de taille, avant qu'il commence à entreprendre celui du traitement des plaies. On a constaté, notamment dans le cas des vignes, un pourcentage important de pertes dues à une telle procédure.

Pour pallier cet inconvénient, on a pensé équiper l'Homme du métier d'un pulvérisateur, pour qu'il puisse pulvériser la "plaie" qu'il réalise à chaque fois fois qu'il effectue une coupe. Cependant, l'expérience a montré que cet appareil était encombrant et que la pulvérisation n'était pas effectuée, à chaque fois ou au bon endroit et de façon régulière.

Pour pallier cet inconvénient de l'encombrement et pour avoir la certitude du traitement de la plaie, on a pensé ensuite coupler le système de pulvérisation avec un sécateur comme, par exemple, dans le dispositif décrit dans le Brevet US-A-2 870 573. Mais, bien qu'améliorant les procédés précédents, ces nouveaux procédés ont eux aussi des inconvénients. En effet, d'une part, pour être sûr que la pulvérisation couvre toute la plaie, elle doit être effectuée dans un cône d'angle relativement grand, ce qui fait qu'une quantité non négligeable de produit de traitement est perdue. D'autre part, comme le produit doit être pulvérisé, il doit être liquide. Ceci fait que le volume de produit liquide transportable par un homme ne peut, en fait, traiter qu'une faible quantité de plantes coupées, ce qui oblige l'homme du métier à aller s'approvisionner souvent en liquide à pulvériser. L'expérience montre qu'il a donc tendance à ne pas effectuer toutes les pulvérisations, surtout quand le temps le presse.

La présente invention a pour but de réaliser un dispositif de coupe ou sécateur effectuant le traitement d'une tige simultanément à la coupe de celle-ci, qui soit d'une réalisation simple, facile d'emploi, compact et ergonome, tout en apportant les avantages de la minimisation de la consommation de produit de traitement et de l'application de ce traitement, à coup sûr, à chaque coupe.

La présente invention a pour objet un dispositif de coupe ou sécateur effectuant le traitement d'une tige simultanément à la coupe de celle-ci, comportant :

au moins une lame coupante,

au moins une lame rabatteuse montée pivotante par rapport à ladite lame coupante, ladite lame rabatteuse comportant une surface apte à glisser dans sa rotation sur au moins une portion d'une face de ladite lame coupante,

des moyens de support des deux dites lames coupante et rabatteuse en forme de manche, les deux dits manches étant liés respectivement auxdites lames par une partie médiane, la rotation des deux dites lames étant animée autour d'un arbre de rotation traversant les deux dites parties médianes,

au moins une réserve de produit de traitement,

un canal dudit produit réalisé dans au moins une partie de la lame coupante et débouchant par au moins un orifice situé sur une face de ladite lame coupante, ledit canal traversant ladite partie médiane pour relier ladite réserve audit orifice réalisé dans ladite lame coupante, et

des moyens pour commander l'envoi d'une certaine quantité déterminée dudit produit de ladite réserve au niveau dudit orifice, CARACTERISE PAR LE FAIT QUE ledit orifice est situé dans la portion de ladite lame coupante apte à être recouverte par ladite surface de ladite lame rabatteuse au cours de la rotation de celle-ci, et que lesdits moyens de commande de l'envoi dudit produit permettent d'obtenir une goutte dudit produit à la sortie dudit orifice quand ladite surface de la lame rabatteuse est sensiblement en regard de ladite portion de face de la lame coupante, ladite réserve étant située dans un logement réalisé dans le manche relié par une partie médiane à ladite lame coupante.

D'autres caractéristiques et avantages de la présente invention apparettront au cours de la description suivante donnée en regard des dessins annexés à titre illustratif mais nullement limitatif, dans lesquels:

 - la FIGURE 1 représente, dans une vue partiellement écorchée, un mode de réalisation d'un dispositif de coupe et de traitement simultanés d'une tige de plante selon l'invention,

– les FIGURES 2, 3 et 4 représentent des détails de la réalisation du dispositif selon la FIGURE 1,

– les FIGURES 5 et 6 représentent des vues du dispositif selon les FIGURES 1 à 4 permettant d'expliciter le fonctionnement du dispositif selon l'invention,

– la Figure 7 représente, en vue partielle écorchée, un mode de réalisation d'un perfectionnement concernant les moyens d'injection de produit,

– la Figure 8 représente, en vue schématique, un autre mode de réalisation de perfectionnement de l'élément représenté sur la Figure 7, et

– les Figures 9 et 10 représentent deux modes de réalisation des moyens de coupe selon le dispositif en accord avec les Figures 1 à 8.

Dans l'ensemble des Figures, les mêmes références désignent les mêmes éléments.

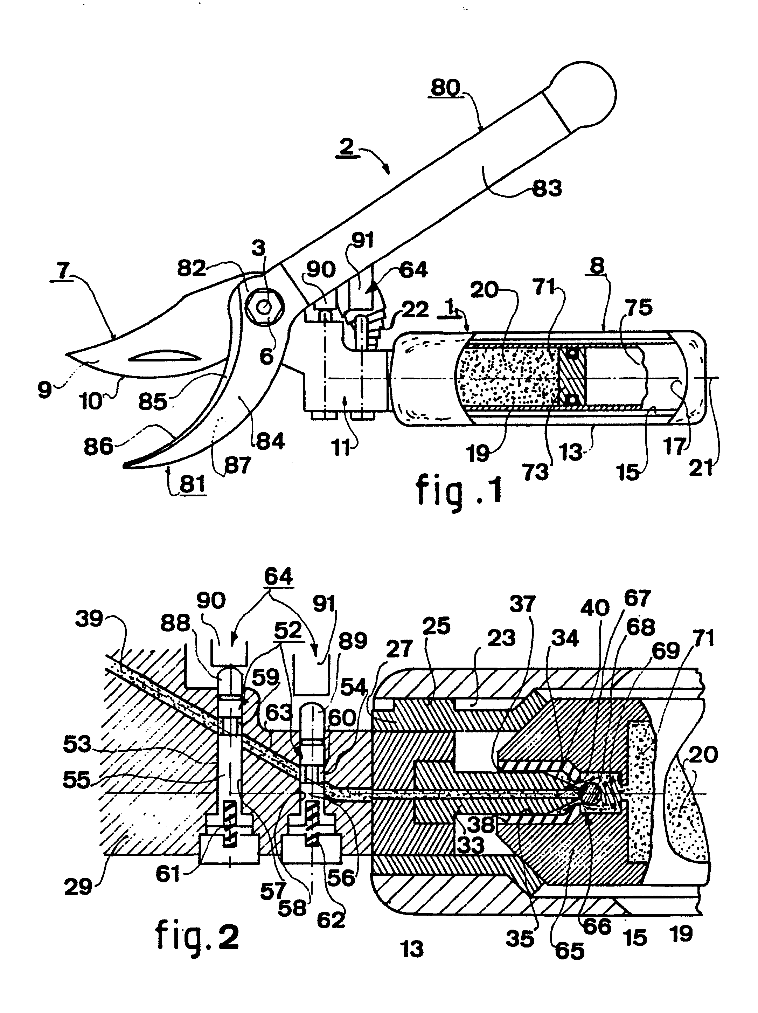

En revenant plus particulièrement à la FIGURE 1, celle-ci représente un dispositif de coupe et de traitement simultanés d'un tige de plante, comme par exemple un sarment de vigne, une branche d'arbre fruitier, etc... Il est, de même, entendu que, par traitement, on entend aussi bien un traitement préventif de protection qu'un traitement curatif dans le cas d'une maladie, chacun de ces traitements utilisant des produits appropriés.

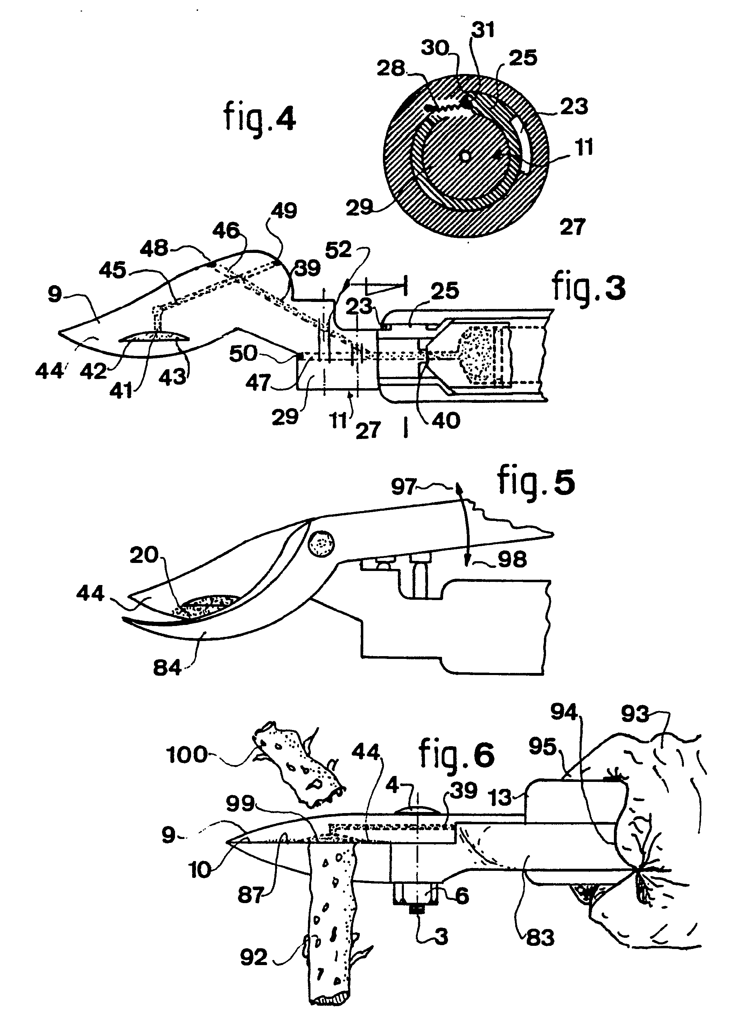

Le dispositif comprend essentiellement deux pièces principales 1 et 2 montées pivotantes l'une sur l'autre sur un arbre 3 pouvant être épaulé de chaque côté par une collerette 4, et éventuellement par un écrou 5 sur une partie taraudée 6 de l'arbre 3 (FIGURE 6).

La pièce principale 1 comprend deux parties 7 et 8 solidaires l'une de l'autre par une partie médiane 11, chacune des parties 7 et 8 étant situées de chaque côté de l'arbre 3, l'arbre 3 traversant la partie médiane 11. La partie 7 constitue un lame coupante 9 dont le fil 10 a une forme courbe du type convexe.

La partie 8 constitue un manche de préhension 13 de forme générale cylindrique, dans lequel est réalisé un logement en creux 15 comportant au moins une large ouverture 17 permettant l'introduction d'une capsule 19 dans une position déterminée, comme il sera décrit ci-après.

Avantageusement, ce manche de préhension 13 qui a une longueur largement supérieure à la largeur d'au moins une main est monté pivotant autour de son axe longitudinal 21 sur la partie médiane 11, et ce, sur un certain nombre de degrés, par exemple une trentaine, cette valeur dépendant de plusieurs paramètres, et notamment de la possibilité, comme il sera décrit ci-après, de rotation de la pièce 2 par rapport à la pièce 1.

Les deux positions limites de cette rotation sont données par une échancrure 23 réalisée dans l'extrémité du manche cylindrique 13 coopérant avec un ergot 25 (FIGURE 4) solidaire de la partie médiane 11. Cet ergot 25 peut être réalisé dans la masse d'une seule pièce ou constitué, comme représenté, par un manchon 27 rapporté sur une autre pièce plus massique 29. Eventuellement même, le manche 3 et le manchon 27 peuvent être liés par des moyens élastiques illustrés schématiquement en 28, dans un souci de simplification, pour tendre à ramener, à chaque fois, dans une position en "butée origine", un bord, par exemple 30, de l'échancrure 23 contre un côté 31 de l'ergot 25.

Comme mentionné précédemment, la partie massique 29 comporte une buse 33 (FIGURE 3) qui émerge dans le logement en creux 15, se terminant par une partie conique 34 favorisant son introduction dans l'extrémité 35 de la capsule 19 qui comporte, à cet effet, une ouverture 37 chemisée, par exemple, par une gaine 38 d'étanchéité en un produit caoutchouté élastique, par exemple.

Dans cette buse 33, dans la partie massique 19, dans la partie 11 et dans la lame 9, est réalisé un canal 39 dont une première extrémité débouche en 40 au centre de la partie conique 34 de la buse 33 et dont l'autre extrémité 41 débouche dans le fond d'une échancrure 42 réalisée en surface de la lame 9. Cette échancrure est de forme oblongue et constitue une cavité dans la masse de la lame 9 ayant une ouverture 43 à la surface 44 de la lame coupante 9. Cette surface 44 de la lame est une portion de surface plane sur laquelle sera apte à coopérer, comme il sera décrit ci-après, une lame rabatteuse.

Le canal 39 est avantageusement réalisé par des portions linéaires de canaux 45, 46, 47 réalisés par perçage et bouchés en 48, 49, 50 de façon à déterminer un seul canal 39 étanche entre ses deux extrémités 40 et 41.

Avantageusement, à ce canal 39, sont associés des moyens de vannes doseuses 52 pour ne laisser passer qu'une certaine quantité de produit, d'un volume déterminé, qui sera amené à couler dans ce canal 39 en provenance de la capsule 19.

Un exemple plus détaillé de réalisation de ces moyens de vannes doseuses 52 commandables est donné sur la FIGURE 2. Sur le canal 39, avantageusement dans la partie médiane 11, à proximité de l'axe de rotation 3, sont situées en série deux vannes 53, 54. Chaque vanne est constituée d'un piston cylindrique 55, 56 coulissant de façon étanche dans un logement cylindrique 57, 58. Les axes de ces logements cylindriques sont concourants avec l'axe du canal 39 et font avec celui ci un angle non nul, avantageusement égal à un angle droit. Dans le piston est réalisé une gorge circulaire 59, 60, avantageusement d'une longueur supérieure au diamètre du canal 39. Ces deux pistons sont soumis à l'action d'un ressort 61, 62 pour tendre à les amener à une position dite "de repos" lorsqu'aucune force extérieure n'est exercée sur les pistons. Dans cette position, les deux pistons obstruent le canal 39 pour délimiter une portion 63 de celui-ci complètement fermée.

A ces moyens de vannes doseuses 52 sont associés des moyens de commande 64 qui sont avantageusement couplés à la deuxième pièce principale 2 et qui seront décrits ultérieurement avec celle-ci.

En fait, ces deux pistons sont commandés à un moment déterminé, les deux pistons étant déplacés en parallèle et en synchronisme, pour que la première vanne 54 située le plus près de la capsule 19 soit ouverte en premier, pour favoriser l'entrée du produit provenant de la capsule dans la portion 63 du canal, et que l'autre vanne 53 soit ensuite ouverte pour permettre à une quantité de produit de se propager dans le canal 39 vers l'échancrure 42. Ensuite, les deux vannes sont complètement fermées, dans le sens inverse du déplacement des pistons, ce qui permet le réapprovisionnement de la portion 63 en une quantité déterminée de produit apte à être à nouveau envoyé dans le canal, vers l'échancrure 42.

La capsule 19 contenant le produit 20 comporte une valve 66 commandant la sortie 37 située à son extrémité 65. La valve 66 est formée d'un siège 67 sur lequel vient se plaquer un clapet 68 en forme de bille, sous l'action d'un ressort 69. De ce fait, quand la capsule 19 est introduite dans le logement 15, de façon que l'ouverture 37 épouse l'extrémité 34 de la buse 33, cette extrémité est étanchée sur la gaine 38 et repousse alors le clapet 68 pour mettre en communication l'intérieur 71 de la capsule avec le canal 39.

Cette capsule est apte à contenir un produit 20 du genre gel ou graisse. Ce produit est mis sous pression au moyen, par exemple d'un piston 73 apte à coulisser de façon étanche à l'intérieur 71 de ladite capsule, pour séparer le produit 20 du fond 75 de la capsule, ce fond contenant un gaz sous pression, pour permettre de pousser le piston et mettre en pression le produit 20 pour pouvoir le faire pénétrer et s'écouler dans le canal 39 jusqu'à l'échancrure 42.

Le dispositif comprend, comme mentionné ci-avant, une deuxième pièce principale 2 constituée de deux parties 80 et 81 séparées par une partie médiane 82 à travers laquelle passe l'arbre de rotation 3, ces trois parties étant réalisées en un seul bloc.

La partie 80 constitue un manche 83 d'une longueur sensiblement égale à celle du manche 13, c'est-à-dire légèrement supérieure à la largeur d'une main. La deuxième partie 81 est constituée d'une lame rabatteuse 84 ayant une surface de rabat 85 dont le bord 86 est de forme concave et d'une coubure sensiblement égale à celle du fil coupant 10 de la lame 9. Comme mentionné précédemment, les deux pièces principales 1 et 2 peuvent pivoter l'une par rapport à l'autre autour de l'axe 3, de façon que le bord 86 de la lame rabatteuse 84 se déplace dans la rotation définie ci-dessus sur, ou sensiblement sur, la surface 44 de la lame coupante 9, et de façon que la surface 87 aboutissant au bord 86 de la surface de rabat 85 soit sensiblement parallèle à la surface 44 de la lame 9 et que, dans la rotation, ces deux surfaces 44 et 87 soient sensiblement parallèles entre elles, à une distance très proche l'une de l'autre, et même, avantageusement, en contact, pour glisser l'une sur l'autre.

Dans un mode très avantageux, la rotation est déterminée pour que, en fin de course, les deux surfaces 44 et 87 se recouvrent suffisamment pour que l'échancrure 42 dans la lame 9 soit recouverte partiellement, sinon totalement, par la surface 87.

Les deux pièces principales sont maintenues en position écartée au moyen d'un ressort 22, cette position étant illustrée sur la FIGURE 1.

Enfin, comme mentionné précédemment, le dispositif comprend des moyens de commande 64 des moyens de vannes doseuses 52. Il est très avantageux de coupler ces moyens de commande à la deuxième pièce principale 2. Dans l'exemple illustré, ces moyens de commande sont couplés au manche 83. Pour cela, les deux pistons 55 et 56 ont leur extrémité respective 88 et 89 émergeant de la partie médiane 11 du côté du manche 83. Sur le manche 83, sont alors solidarisées des pattes de butée 90, 91 pouvant, dans la rotation du manche 83 par rapport au manche 13, venir sélectivement contre les deux extrémités émergeantes 88 et 89 des deux pistons, pour commander leur déplacement par glissement, comme décrit ci-avant, pour ordonner le passage du produit 20 vers l'échancrure 42.

Le dispositif décrit ci-dessus fonctionne de la façon suivante.

Quand l'Homme du métier veut procéder à la taille, par exemple, d'une branche 92, il prend le dispositif dans sa main 93, droite par exemple, le manche 83 dans le fond 94 de la paume de la main 93, l'extrémité des doigts 95 emprisonnant le manche 13, une capsule 19 pleine de produit 20 ayant été introduite dans le logement 15, comme décrit précédemment. L'homme exerce plusieurs rotations des deux manches l'un vers l'autre, à l'encontre de l'effort exercé par le ressort 22 qui tend à écarter les deux manches l'un de l'autre. De ce fait, le produit 20, par doses successives du fait de la commande sélective des deux vannes 53 et 54 comme décrit précédemment, parcourt le canal 39 jusqu'à l'échancrure 42, pour qu'au moins une goutte 96 apparaisse au niveau de la sortie 41 dans l'échancrure, et suffisamment haute pour dépasser avantageusement la surface 44 de la lame 9. Quand la lame rabatteuse 84, par sa surface 87, est au contact de la surface 44 et quand ces deux lames s'éloignent, suivant la flèche 97 sur la FIGURE 5, l'une de l'autre pour prendre une position comme illustré sur la FIGURE 1, la lame rabatteuse 84 étale le produit sur la surface 44. Ceci est d'autant plus facile que le produit est d'un coefficient de viscosité important et que, comme décrit ci-avant, la goutte de produit 20 est poussée hors de l'échancrure 42 quand la surface 87 recouvre cette échancrure.

Ainsi, quand l'homme se sert du dispositif en ramenant suivant la flèche 98 le manche 83 vers le manche 13, la lame rabatteuse 84 amène la tige non coupée sur le fil 10 de la lame coupante et l'entaille de la tige commence à s'effectuer. La lame rabatteuse continue à pousser la tige et sa face coupée 99 sur la surface 44 de la lame 9 qui a été préalablement enduite de produit 20.

De ce fait, la surface 99 est automatiquement enduite par du produit 20 et donc traitée comme mentionné au préambule. Dans ce mouvement de coupe, la lame rabatteuse pousse complètement la tige coupée et, en éjectant la partie coupée 100, vient recouvrir à nouveau l'échancrure 42. Comme les deux manches se sont rapprochés, les moyens de commande 64 ont coopéré avec les moyens de vannes doseuses 52 pour envoyer une nouvelle goutte de produit 20 dans l'échancrure 42. Quand celle-ci est recouverte par la surface 87 de la lame rabatteuse 84, les lames revenant à leur position origine, c'est-à-dire écartées l'une de l'autre (FIGURE 1), la lame rabatteuse 84 réenduit la surface 44 de la lame 9.

Si l'Homme du métier utilisait de façon inverse ce dispositif, en utilisant la lame rabatteuse comme lame coupante, la surface 87 de celle-ci étant malgré tout enduite de produit 20, la surface taillée de la partie de tige restante serait, malgré tout, traitée.

On voit donc, dans cette description, les avantages du dispositif et du procédé. En effet, le produit 20 de traitement est utilisé juste pour être appliqué sur la "plaie", et non pas pulvérisé sur une grande surface. En conséquence, pour un même volume de capsule, on peut traiter un plus grand nombre de plantes, et sans risque de pollution désordonnée. De plus, comme le produit doit être visqueux selon une caractéristique importante, le produit peut être moins dilué et donc utilisé à de plus petites doses restant cependant efficaces car rien, ou presque, de ces doses n'est perdu.

L'Homme du métier peut donc traiter un grand nombre de plantes sans être obligé de souvent recharger le dispositif de coupe et de traitement simultanés selon l'invention. Du fait de la concentration du produit, les capsules sont de très petite taille et l'Homme du métier peut donc en avoir plusieurs sur lui, ce qui lui permet d'effectuer sans difficulté toute une journée de coupe, et de traiter simultanément, à chaque coupe, la plaie de taille de la tige, sans avoir à aller se ravitailler en produit de traitement.

Enfin, le manche 13 tenu par l'extrémité des doigts subit une rotation à l'encontre du ressort, pour absorber la rotation équivalente des doigts quand les deux manches se déplacent l'un par rapport à l'autre, ce qui évite l'apparition d'ampoules sur les doigts.

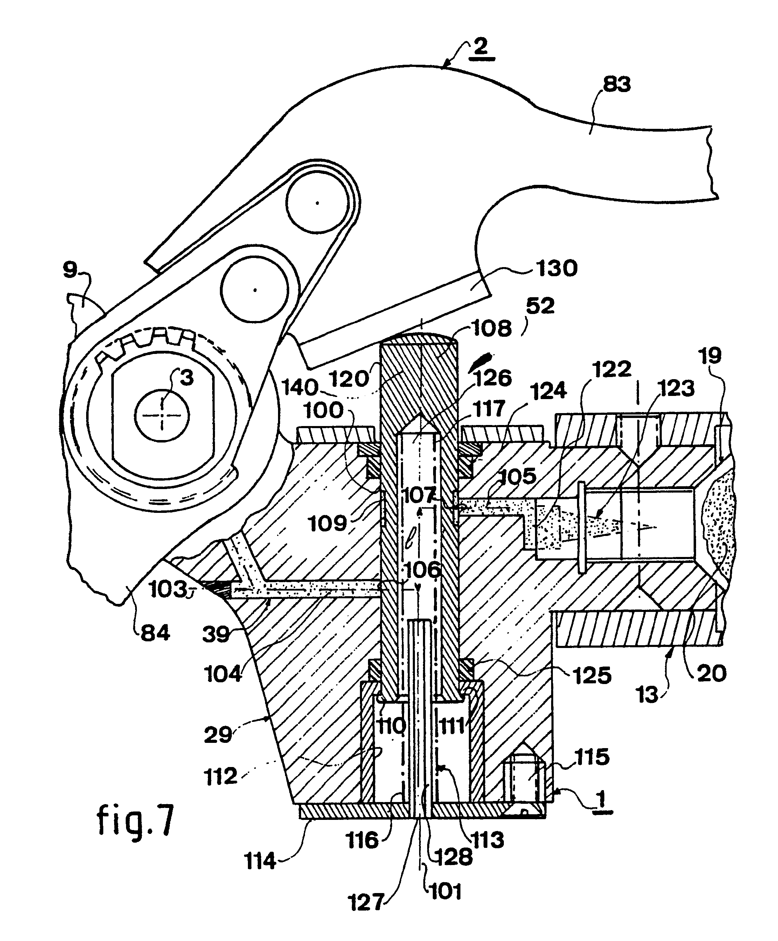

Le mode de réalisation illustré sur la figure 7 représente un perfectionnement du dispositif illustré sur les figures 1 à 6. Sur cette Figure, il est représenté, du moins partiellement, les deux pièces principales 1 et 2 formant le dispositif, la pièce principale 1 comportant à une extrémité une lame coupante 9 et la pièce principale 2 comportant à une extrémité une lame rabatteuse 84, ces deux pièces étant montées pivotantes l'une sur l'autre autour d'un arbre 3.

Plus particulièrement, la pièce principale 1 qui porte la lame coupante 9 comporte un corps massique 29 faisant partie du manche 13 de préhension, dans lequel est réalisé un conduit 39 permettant de mettre en communication une capsule 19 contenant un produit 20 de traitement avec l'orifice émergeant au niveau de la lame coupante, comme décrit précédemment.

Sur la figure 7, le corps massique 29 comprend des moyens de vanne doseuse commandables 52, dans un mode de réalisation plus avantageux que celui décrit ci-dessus car il ne comporte qu'un seul piston apte à coulisser dans un logement cylindrique. Ces moyens de vanne doseuse commandables 52 comportent un logement cylindrique 100 réalisé suivant un axe 101 sensiblement perpendiculaire à l'axe 103 du conduit 39. Plus particulièrement, ce conduit 39 est réalisé par au moins deux portions 104 et 105 d'axes 103 parallèles mais débouchant dans le logement cylindrique à deux niveaux différents 106 et 107, de façon que les deux axes 103 appartenant respectivement à ces deux portions de conduit 104 et 105 soient distants l'un de l'autre d'une quantité "1".

Dans ce logement cylindrique 100 est monté coulissant un piston 108 suivant l'axe de coulissement 101 constituant l'axe du logement cylindrique 100. Dans ce piston, est réalisé une encoche avantageusement en Forme de gorge annulaire 109. Le piston 108 comporte une butée 110 qui lui permet de prendre une position de fin de course sur un épaulement 111 réalisé dans une partie en retrait 112 du logement cylindrique 100. Le piston 108 est maintenu dans cette position de fin de course, par exemple, par l'action d'un ressort de compression 113 prenant appui par son extrémité 116 sur un capuchon 114 monté sur le corps massique 29, par exemple au moyen de vis 115, permettant ainsi d'obturer au moins partiellement le retrait 112. Tandis que le ressort 113 prend appui, par son extrémité 116, sur le capuchon 114, par son autre extrémité 117, il exerce sur le piston 108 une poussée tendant à le maintenir dans une position "sortie" qui est la position de fin de course mentionnée précédemment, lorsque la butée 110 vient contre l'épaulement 111. L'encoche 109 réalisée sur la paroi extérieure 120 du piston 108, est située à une position telle qu'elle soit juste en regard de la portion de conduit 105 lorsque le piston est en position "sortie".

Le piston peut coulisser, en comprimant le ressort 113, sous l'action par exemple d'une patte de butée 130 solidaire du manche 83 constituant un élément de la pièce principale 2, cette patte de butée 130 coopérant avec la partie 140 du piston émergeant du corps massique 29. L'amplitude de coulissement à laquelle peut être soumis le piston 108 est définie de façon que, lorsque le ressort est comprimé et que la rotation des deux pièces principales 1 et 2 a amené les deux lames coupante et rabatteuse l'une sur l'autre, l'encoche 109 soit alors venue en regard de l'orifice 106 de la portion de conduit 103 et soit en dehors de l'orifice 107 de la portion de conduit 105.

Le conduit 105 a son autre extrémité 122 connectée, au moyen d'un connecteur à capsule 123, avec l'intérieur de la capsule 19 contenant le produit de traitement 20.

Il est avantageux que le piston coulisse dans le logement cylindrique de façon étanche. Cette étanchéité est au moins partiellement réussie par un usinage ajusté. Mais, dans un mode avantageux, l'étanchéité est assurée par deux joints toriques 124 et 125 situés sensiblement aux deux extrémités du logement 100.

Pour que le piston puisse coulisser uniquement lors de la rotation de la pièce principale 2 par rapport à la pièce principale 1, il comporte une chambre intérieure 126 qui est mise à l'air par une ouverture 127 d'un manchon 128 pénétrant à l'intérieur de la chambre 126, ce manchon 128 permettant, en plus, de pouvoir guider le ressort 113 quand celui est comprimé.

Le dispositif tel qu'illustré sur la Figure 7 fonctionne, d'une façon générale, comme décrit ci-dessus. Cependant, dans ce cas particulier de réalisation de moyens de vanne doseuse plus simples, plus économiques et moins lourds, le dispositif fonctionne de la façon suivante :

Tout d'abord, le produit 20 est choisi de façon qu'il soit compressible, c'est-à-dire qu'il réduise de volume lorsqu'il est soumis à une pression importante, et que son volume subisse une certaine expansion lorsque la pression devient plus faible.

Dans ces conditions, lorsque la capsule 19 contenant le produit 20 sous une certaine pression est mise en communication avec la portion de conduit 105, le produit 20 s'écoule dans cette portion de conduit et, si le piston 108 est mis dans la position de butée "sortie", s'écoule aussi dans l'encoche 109, jusqu'à la repolir en y étant comprimé.

En actionnant les deux pièces principales de façon à ramener la pièce principale 2 vers la pièce principale 1, l'extension 130 de la lame rabatteuse 84 appuie sur la partie 140 du piston émergeant du corps massique 29, obligeant le piston 108 à coulisser dans le logement cylindrique 100, de telle façon que l'encoche 109 quitte sa position en regard de l'ouverture 107 et vienne en position en regard de l'ouverture 106. Dans ce cas, l'encoche 109 n'est plus mise en communication avec la portion de conduit 105 et donc l'intérieur de la capsulle 19. Le produit va donc pouvoir se détendre et augmenter de volume de telle façon qu'une certaine quantité de produit pénètre dans la portion de conduit 104, par l'ouverture 106.

Quand le piston revient à sa position "sortie" origine, le produit contenu dans l'encoche 109 n'est plus comprimé et cette encoche va donc pouvoir être alimentée par une dose supplémentaire introduite sous l'effet de la pression régnant dans la capsule 19. Le produit 20 remplissant l'encoche 109 est à nouveau comprimé et pourra donc, à nouveau être introduit dans la portion de conduit 104 sous l'action seule de sa détente, lorsque la manoeuvre des manches amènera l'encoche en regard de l'orifice 106.

Ainsi, après plusieurs manoeuvres qui poussent des doses successives de produit, le conduit 39 est rempli de ce produit jusqu'à l'orifice aménagé sur la surface de la lame coupante. Une manoeuvre supplémentaire oblige le produit à déborder de l'orifice 41.

Avec ce dispositif, on réalise donc des moyens de vanne doseuse très simples et qui, de plus, par une pression ajustée du produit dans la capsule, permettent de bien doser les quantités successives de produit et de ne commander l'envoi du produit que lorsque les lames coupante et rabatteuse sont ramenées l'une vers l'autre, c'est-à-dire lorsque le manche 83 est amené, dans sa rotation, vers le manche 13 de préhension.

L'avantage d'une telle réalisation des moyens de vanne doseuse est qu'ils ne comportent qu'un seul piston, au lieu de deux dans la réalisation décrite dans le Brevet principal, et que le produit n'est envoyé vers la lame coupante que lorsqu'il y a un mouvement de rapprochement des deux manches, pour une coupe, et en aucune façon lorsque les deux manches s'éloignent, ce qui permet, par rapport à la réalisation précédente, une économie de produit pouvant aller jusqu'à cinquante pour cent.

Dans l'exemple décrit ci-dessus, la capsule 19 comprend un produit 20 de traitement qui est mis en pression par une quantité de gaz sous pression entre le fond 75 et le piston 73. Cependant, une telle réalisation peut présenter des difficultés, d'autant plus que le gaz à utiliser doit avoir des compositions particulières, pour éviter des accidents.

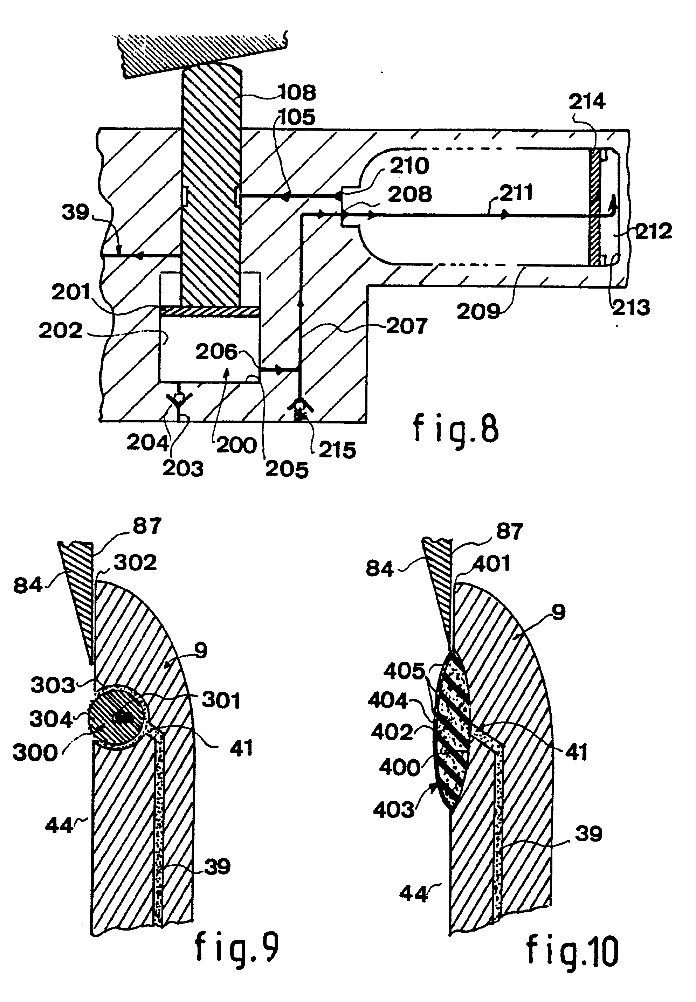

La Figure 8 représente, sous forme schématique, un mode de réalisation permettant d'éliminer les inconvénients mentionnés ci-dessus.

Dans ce mode de réalisation, le piston 108 est couplé à des moyens de pompe à air 200 comprenant un piston 201 coulissant dans un cylindre 202 comportant une admission d'air 203 avec un clapet anti-retour 204. Le fond 205 du cylindre comporte une sortie 206 reliée par un conduit 207 à une entrée d'alimentation en air 208 d'une capsule 209, cette capsule comportant aussi une sortie 210 de produit 20. Dans ce cas, la capsule 209 comprend, en plus des moyens constituant la capsule 19 décrite ci-dessus, un conduit intérieur 211 reliant l'entrée 208 à une chambre pneumatique 212 définie entre son fond 213 et un piston coulissant 214. Au conduit 207 est avantageu-

(87) de ladite lame rabatteuse au cours de la rotation de celle-ci, et que lesdits moyens de commande de l'envoi dudit produit permettent d'obtenir une goutte dudit produit à la sortie dudit orifice quand ladite surface (87) de la lame rabatteuse est sensiblement en regard de ladite portion de face (44) de la lame coupante, ladite réserve (19) étant située dans un logement (17) réalisé dans le manche (13) relié par une partie médiane (11) à ladite lame coupante (9).

2. Dispositif selon la revendication 1, CARACTERISE PAR LE FAIT QU'il comporte des moyens de vannes doseuses (52) disposés sur ledit canal (39) et des moyens (64) pour commander lesdits moyens de vannes doseuses (52).

3. Dispositif selon la revendication 2, CARACTERISE PAR LE FAIT QUE lesdits moyens de vannes doseuses (52) sont constitués par deux vannes (53, 54) montées en série sur ledit canal (39) pour déterminer entre elles une portion de canal (63) de volume déterminé.

4. Dispositif selon la revendication 3, CARACTERISE PAR LE FAIT QUE ladite réserve (19) est constituée par une capsule (19) contenant ledit produit (20) et par des moyens pour mettre en pression (73, 75) ledit produit (20) dans ladite capsule, ladite capsule (19) ayant une ouverture (37, 35) fermée par un clapet (66) commandable.

5. Dispositif selon la revendication 1, CARACTERISE PAR LE FAIT QUE ledit produit (20) est un produit compressible.

6. Dispositif selon la revendication 1, CARACTERISE PAR LE FAIT QUE ledit produit (20) a un coefficient de viscosité ipmportant.

7. Dispositif selon la revendication 6, CARACTERISE PAR LE FAIT QUE lesdits moyens pour commander l'envoi d'une certaine quantité déterminée dudit produit sont constitués par
- un logement cylindrique (100) coupant ledit conduit (39) et réalisé dans un corps massique (29) suivant un axe (101) faisant un angle non nul avec celui (103) dudit conduit, deux extrémités (106, 107) des deux portions (104, 105) dudit conduit débouchant dans ledit logement (100) à deux niveaux différents,
- un piston (108) monté coulissant dans ledit logement, ledit piston comportant sur sa paroi latérale (120) une encoche (109) d'un volume déterminé, ladite encoche étant réalisée de façon que, dans le coulissement dudit piston, pour deux positions, elle soit respectivement en regard des deux dites extrémités (106, 107) des deux portions du conduit, et
- des moyens pour soumettre ledit produit à une pression déterminée.

8. Dispositif selon la revendication 7, CARACTERISE PAR LE FAIT QUE ledit piston (108) comporte au moins une partie (140) émergeant dudit corps, une butée (110, 111, 112) de fin de course, et un ressort (113) interposé entre ledit piston (108) et ledit corps (29, 114) pour tendre à maintenir et ramener ledit piston dans sa position en butée de fin de course, et des moyens commandables pour exercer une pression sur la partie (140) dudit piston émergeant dudit corps.

9. Dispositif selon la revendication 7, CARACTERISE PAR LE FAIT QUE lesdits moyens pour soumettre ledit produit (20) à une pression déterminée comportent une capsule (209) de produit (20), ladite capsule comportant en son fond une chambre pneumatique (212), ladite chambre étant séparée dudit produit par un piston coulissant (214), des moyens de gonflage (200) coopérant avec le piston (108) monté coulissant dans ledit logement, et des moyens de conduit (207, 211, 215) reliant lesdits moyens de gonflage (200) à ladite chambre pneumatique (212).

10. Dispositif selon l'une des revendications précédentes, CARACTERISE PAR LE FAIT QU'il comporte des moyens d'étalement dudit produit (20) émergeant dudit orifice (41, 42).

11. Dispositif selon la revendication 10, CARACTERISE PAR LE FAIT QUE les moyens pour étaler ledit produit comportent un rouleau (300) monté rotatif dans une portion de cylindre en creux (303) réalisée dans ladite lame coupante (9) au niveau de la dite face (44), une portion de la surface latérale dudit rouleau émergeant dudit cylindre en creux, ledit orifice débouchant dans ledit cylindre en creux.

12. Dispositif selon la revendication 10, CARACTERISE PAR LE FAIT QUE les moyens pour étaler ledit produit comportent une gorge (400) réalisée dans ladite face (44) de ladite lame coupante (9), une grille (404) souple perméable audit produit (405) recouvrant ladite gorge en définissant un espace, un matériau (402) spongieux et perméable audit produit (20) remplissant ledit espace, ledit orifice (41, 42) débouchant dans ledit espace.

## Ansprüche

1. Schneidvorrichtung oder Gartenschere, die die Behandlung eines Gehölzes gleichzeitig mit dessen Schnitt bewirkt, umfassend :
  mindestens ein Schneidblatt (9),
  mindestens ein Trennblatt (84), das schwenkbeweglich relativ zu dem Schneidblatt (9) montiert ist, wobei das Trennblatt eine Oberfläche (87) aufweist, die bei der Schwenkbewegung auf mindestens einem Teil einer Seite (44) des Schneidblatts gleitend ausgebildet ist,
  Supportmittel (8, 80) der beiden genannten Schneid- (9) und Trennblätter (84) in Form von Griffen (13, 83), welche beiden Griffe mit den jeweiligen Blättern über einen Mittelabschnitt (11, 82) verbunden sind, wobei die Schwenkung der beiden Blätter um eine Schwenkwelle (3) erfolgt,

sement reliée une soupape de sécurité tarée 215, pour éviter de gonfler la chambre pneumatique 212 au-delà d'un seuil limite.

Ainsi, comme expliqué en regard de la figure 7, quand on utilise le dispositif, chaque fois que l'on effectue une coupe, on déplace le piston 108, ce qui pompe une quantité d'air grâce aux moyens 200 envoyée dans la chambre pneumatique 212. Le produit 20 est ainsi constamment sous pression, ce qui permet donc d'obtenir le fonctionnement et le résultat mentionnés ci-avant.

De même, dans les modes de réalisation décrits ci-dessus, le canal d'alimentation 39 de l'espace compris entre les deux lames 9 et 84 débouche par un orifice 41 (ou 42), la lame rabatteuse 84, en passant devant cet orifice, contribuant à étaler la goutte de produit 20 sur les deux faces 44 et 87, respectivement des deux lames coupante 9 et rabatteuse 84. Il se peut que l'étalement du produit par la lame ne soit pas suffisant. On combine donc l'orifice 41 à des moyens pour favoriser cet étalement du produit sur les faces 44 et 87.

La Figure 9 représente une premier mode de réalisation de tels moyens constitués par un rouleau 300 monté rotatif autour d'un axe 301, sensiblement parallèlement au fil 302 de la lame coupante 9, dans un logement semi-cylindrique 303 constituant la forme de l'orifice de sortie 41 du canal 39 du produit 20. Ce cylindre 300 est monté autour de cet axe 301 de façon qu'une légère partie 304 de sa surface extérieure émerge partiellement de la face 44 de la lame coupante. Il est avantageusement réalisé en un matériau qui peut retenir le produit 20 arrivant sous pression par le conduit 39 et en restituer une partie sous l'effet d'une friction. Dans ce cas, lorsque la lame rabatteuse 84 vient recouvrir la face 44 de la lame coupante 9, elle vient buter contre la partie 304 du rouleau 300, l'entraîne en rotation par friction par sa face 87 qui la recouvre. Dans ce déplacement, la face 87 s'imprègne de produit 20 restitué par le matériau du rouleau et imprègne à son tour la partie de la face 44 de la lame coupante 9 sur laquelle elle glisse. On arrive ainsi, dans ce cas, à un très bon étalement du produit 20, et donc un parfait dépôt de ce produit de traitement sur les plaies de taille du végétal.

La figure 10 représente, elle, un deuxième mode de réalisation des moyens pour favoriser l'étalement sur les deux faces des lames coupante et rabatteuse. Dans ce cas, l'orifice 41 du conduit 39 est conformé en une gorge 400 sur une longueur relativement longue, sensiblement parallèle au fil de coupe 401. Dans cette gorge 400 est disposé une pièce de matériau spongieux 402 et perméable au produit 20 arrivant par le canal 39. Le matériau est recouvert d'un couvercle 403 constitué d'une lamelle souple 404 comportant une pluralité d'orifices 405, le morceau de matériau 402 étant disposé dans la gorge de façon qu'il épouse avantageusement tout l'ensemble de l'espace délimité par le fond de la gorge 400 et la lamelle souple 404.

Avec ce deuxième mode de réalisation, quand la lame rabatteuse 84 arrive sur la lamelle souple perforée 404, elle l'écrase. Cet écrasement de la lamelle comprime le matériau spongieux 402 qui dégorge le produit à travers les orifices 405 de la lamelle 404. La face 87 de la lame rabatteuse 84 se trouve donc imprégnée du produit et imprègne à son tour la face 44 de la lame coupante 9.

En fait, le dispositif explicité ci-avant est parfaitement adapté à la coupe manuelle et au traitement simultanés, par exemple des sarments de vigne dans les régions vinicoles. Cependant, il peut être utilisé pour d'autres plantes comme les arbres fruitiers ou d'ornement. Il suffira, pour cela, de bien choisir la substance de traitement avec son excipient, pour obtenir le produit 20 adapté quant à sa qualité de traitement et quant à sa possibilité d'être appliqué par étalement sur les "plaies de taille" des plantes.

Ce dispositif constitue aussi bien un outil pour les professionnels que pour les amateurs du travail bien fait.

## Revendications

1. Dispositif de coupe ou sécateur effectuant le traitement d'une tige simultanément à la coupe de celle-ci, comportant :

au moins une lame coupante (9),
au moins une lame rabatteuse (84) montée pivotante par rapport à ladite lame coupante (9), ladite lame rabatteuse comportant une surface (87) apte à glisser dans sa rotation sur au moins une portion d'une face (44) de ladite lame coupante, des moyens de support (8, 80) des deux dites lames coupante (9) et rabatteuse (84) en forme de manche (13, 83), les deux dits manches étant liés respectivement auxdites lames par une partie médiane (11, 82), la rotation des deux dites lames étant animée autour d'un arbre de rotation (3) traversant les deux dites parties médianes,
au moins une réserve (19) de produit de traitement (20),
un canal (39) dudit produit (20) réalisé dans au moins une partie de la lame coupante (9) et débouchant par au moins un orifice (41, 42) situé sur une face de ladite lame coupante, ledit canal (39) traversant (47) ladite partie médiane (11) pour relier ladite réserve (19) audit orifice (41, 42) réalisé dans ladite lame coupante (9), et
des moyens pour commander (54, 64) l'envoi d'une certaine quantité déterminée dudit produit (20) de ladite réserve (19) au niveau dudit orifice (41, 42), CARACTERISE PAR LE FAIT QUE ledit orifice est situé dans la portion de ladite lame coupante apte à être recouverte par ladite surface

welche die beiden Mittelabschnitte durchsetzt, mindestens eine Reserve (19) von Behandlungsprodukt (20),

einen Kanal (39) des Produktes (20), ausgebildet in mindestens einem Teil des Schneidblatts (9) und in mindestens eine Öffnung (41, 42) mündend, angeordnet auf einer Seite des Schneidblatts, welcher Kanal (39) den Mittelabschnitt (11) durchsetzt (47), zum Verbinden der Reserve (19) mit der Öffnung (41, 42), die in dem Schneidblatt (9) ausgebildet ist, und

Mittel zum Steuern (54, 64) der Förderung einer bestimmten vorgegebenen Quantität des Produkts (20) von der Reserve (19) auf das Niveau der Öffnung (41, 42), dadurch gekennzeichnet, daß die Öffnung sich in dem Abschnitt des Schneidblatts befindet, das von der Oberfläche (87) des Trennblatts während der Schwenkung desselben überdeckbar ist und daß die Steuermittel für die Förderung des Produktes es ermöglichen, einen Tropfen des Produkts am Auslaß der Öffnung zu erhalten, wenn diese Oberfläche (87) des Trennblattes im wesentlichen gegenüber dem Abschnitt der Seite (44) des Schneidblattes ist, wobei die Reserve (19) sich in einer Ausnehmung (17) befindet, die in dem Griff (13) realisiert ist, welcher über einen Mittelabschnitt (11) mit dem Schneidblatt (9) verbunden ist.

2. Vorrichtung nach Anspruch 1, dadurch gekennzeichnet, daß sie Dosierventilmittel (52) umfaßt, angeordnet in dem Kanal (39) sowie Mittel (64) zum Steuern der Dosierventilmittel (52).

3. Vorrichtung nach Anspruch 2, dadurch gekennzeichnet, daß die Dosierventilmittel von zwei Ventilen (53, 54) gebildet werden, die in Serie in dem Kanal (39) montiert sind zum Begrenzen zwischen einander eines Abschnitts des Kanals (63) mit vorbestimmtem Volumen.

4. Vorrichtung nach Anspruch 3, dadurch gekennzeichnet, daß die Reserve (19) von einer Kapsel (19) gebildet ist, die das Produkt (20) enthält und von Mitteln zum Unterdrucksetzen (73, 75) des Produkts (20) in der Kapsel, welche Kapsel (19) eine Öffnung (37, 35) aufweist, die durch ein steuerbares Ventilglied (66) abgeschlossen ist.

5. Vorrichtung nach Anspruch 1, dadurch gekennzeichnet, daß das Produkt (20) ein kompressibles Produkt ist.

6. Vorrichtung nach Anspruch 1, dadurch gekennzeichnet, daß das Produkt (20) einen bedeutenden Viskositätskoeffizienten aufweist.

7. Vorrichtung nach Anspruch 6, dadurch gekennzeichnet, daß die Mittel zum Steuern der Förderung einer bestimmten vorgegebenen Quantität des Produktes gebildet werden von

– einer zylindrischen Ausnehmung (100), die die Leitung (39) durchsetzt und in einem massiven Korpus (29) längs einer Achse (101) realisiert ist, die einen von Null verschiedenen Winkel mit derjenigen (103) der Leitung bildet, wobei zwei Enden (106, 107) der beiden Abschnitte (104, 105) der Leitung in die Ausnehmung (100) auf zwei unterschiedlichen Niveaus münden,

– einem Kolben (108), der gleitbeweglich in der Ausnehmung montiert ist, welcher Kolben auf seiner Seitenwandung (120) eine Ausnehmung (109) eines vorgegebenen Volumens aufweist, wobei die Ausnehmung derart realisiert ist, daß bei der Gleitbewegung des Kolbens für zwei Positionen sie gegenüber dem einen bzw. dem anderen der beiden genannten Enden (106, 107) der beiden Abschnitte der Leitung steht, und

– Mitteln für das Unterdrucksetzen des Produkts mit einem vorgegebenen Druck.

8. Vorrichtung nach Anspruch 7, dadurch gekennzeichnet, daß der Kolben (108) mindestens einen aus dem Korpus herausragenden Abschnitt (140) aufweist, einen Endanschlag (110, 111, 112) und eine Feder (113), die zwischen dem Kolben (108) und dem Korpus (129, 114) eingefügt ist, mit der Tendenz, den Kolben in seine Endanschlagsposition zu führen und halten, und Mittel, die steuerbar sind, zum Ausüben eines Druckes auf den aus dem Korpus herausragenden Abschnitt (140) des Kolbens.

9. Vorrichtung nach Anspruch (7), dadurch gekennzeichnet, daß die Mittel zum Unterdrucksetzen des Produktes (20) unter einem vorgegebenen Druck eine Kapsel (209) des Produkts (20) umfassen, welche Kapsel in ihrem Boden eine Pneumatikkammer (212) aufweist, die von dem Produkt durch einen Gleitkolben (214) getrennt ist, Aufblasmittel (200), die mit dem Kolben (108), gleitbeweglich in der Ausnehmung, zusammenwirken, und Leitungsmittel (207, 211, 215), welche die Aufblasmittel (200) mit der Pneumatikkammer (212) verbinden.

10. Vorrichtung nach einem der vorangehenden Ansprüche, dadurch gekennzeichnet, daß sie Verteilmittel für das aus der Öffnung (41, 42) austretende Produkt (20) umfaßt.

11. Vorrichtung nach Anspruch 10, dadurch gekennzeichnet, daß die Mittel zum Verteilen des Produktes eine Rolle (300) umfassen, die drehbeweglich in einem hohlen zylindrischen Abschnitt (303) montiert ist, eingearbeitet in das Schneidblatt (9) in Höhe der Seite (44), wobei ein Abschnitt der seitlichen Oberfläche der Rolle aus dem Hohlzylinder herausragt und die Öffnung in den Hohlzylinder mündet.

12. Vorrichtung nach Anspruch 10, dadurch gekennzeichnet, daß die Mittel zum Verteilen des Produktes eine Nut (400) umfassen, die in der Seite (44) des Schneidblatts (9) eingearbeitet ist, ein weiches, für das Produkt (405) permeables Gitter (404), das die Nut unter Begrenzung eines Raumes überdeckt, ein Schwamm-Material (402), das für das Produkt (20) permeabel ist und den Raum füllt, wobei die Öffnung (41, 42) in diesen Raum mündet.

## Claims

1. Device for cutting or pruning-shears for simultaneously cutting and treating a plant stem, device comprising :
at least one cutting blade (9),
at least one anvil blade (84) pivotally mounted relative to said cutting blade (9), said anvil blade including a surface (87) suitable for sliding during its rotation over at least a portion of a face (44) of said cutting blade,
support means (8, 80) for said cutting blade (9) and anvil blade (84) in the form of handles (13, 83), said two handles being respectively connected to said blades by a mid-portion (11, 82), the rotation of the two said blades being driven about a rotary shaft (3) passing through two said mid-portions,
at least one store (19) of treatment substance (20),
a channel (39) for said substance (20) made through at least a portion of the cutting blade (9) and opening out via at least one orifice (41, 42) situated in a face of said cutting blade, said channel (39) passing (47) through said mid-portion (11) in order to connect said store (19) to said orifice (41, 42) provided in said cutting blade (9), and
means for controlling (54, 64) the transmission of a certain determined quantity of said substance (20) from said store (19) to said orifice (41, 42), CHARACTERIZED BY THE FACT THAT said orifice is situated in the portion of said cutting blade able to be covered over by said surface (87) of said anvil blade when it is rotating, and by the fact that said means for controlling the transmission of said substance enable a drop of said substance to be obtained at the outlet from said orifice when said surface (87) of the anvil blade is substantially opposite to said portion (44) of the cutting blade, said store (19) being situated in a housing (17) provided in the handle (13) connected via one said mid-portion (11) to said cutting blade (9).

2. Device according to claim 1, CHARACTERIZED BY THE FACT THAT it comprises metering valve means (52) disposed on said channel (39) and means (64) for controlling said metering valve means (52).

3. Device according to claim 2, CHARACTERIZED BY THE FACT THAT said metering valve means (52) are constituted by two valves (53, 54) mounted in series on said channel (39) to determine therebetween a portion of channel (63) of determined volume.

4. Device according to claim 3, CHARACTERIZED BY THE FACT THAT said store (19) is constituted by a capsule (19) containing said substance (20) and by means for putting in pressure (73, 75) said substance (20) in said capsule, said capsule (19) having an opening (37, 35) which is closed by a controllable valve member (66).

5. Device according to claim 1, CHARACTERIZED BY THE FACT THAT said substance (20) is a compressible substance.

6. Device according to claim 1, CHARACTERIZED BY THE FACT THAT said substance (20) has a high coefficient of viscosity.

7. Device according to claim 6, CHARACTERIZED BY THE FACT THAT said means for controlling the transmission of a certain determined quantity of said substance are constituted by :
– a cylindrical housing (100) intersecting said duct (39) and provided in a solid body (29) along an axis (101) extending at a non-zero angle to the axis (103) of said duct, with two ends (106, 107) of the two portions (104, 105) of said duct opening out into said housing (100) at two different levels,
– a piston (108) slidably mounted in said housing, said piston comprising on its side wall (120) a notch (109) of a determined volume, said notch being made in such manner that, when said piston slides, it occupies two positions each of which is facing one of said ends (106, 107) of said two duct portions, and
– means for subjecting said substance to a determined pressure.

8. Device according to claim 7, CHARACTERIZED BY THE FACT THAT said piston (108) includes at least one portion (140) which emerges from said body, an end-of-stroke abutmen (110, 111, 112), and a spring (113) interposed between said piston (108) and said body (29, 114) in order to urge and return said piston to its end-of-stroke abutment position, and controllable means for exerting pressure on that portion (140) of said piston which emerges from said body.

9. Device according to claim 7, CHARACTERIZED BY THE FACT THAT said means for subjecting said substance (20) to a determined pressure comprise a capsule (209) of substance (20), said capsule including a pneumatic chamber (212) at the end thereof, said chamber being separated from said substance by a sliding piston (214), inflation means (200) co-operating with the piston (108) being slidably mounted in said housing, and duct means (207, 211, 215) connecting said inflation means (200) to said pneumatic chamber (212).

10. Device according to any preceding claim, CHARACTERIZED B THE FACT THAT it comprises means for spreading said substance (20) as it emerges from said orifice (41, 42).

11. Device according to claim. 10, CHARACTERIZED BY THE FACT THAT the means for spreading said substance comprise a roller (300) rotatably mounted in a hollow cylinder portion (303) made in said cutting blade (9) level with said face (44), with a portion of the side surface of said roller emerging from said hollow cylinder, and with said orifice opening out into said hollow cylinder.

12. Device according to claim 10, CHARACTERIZED BY THE FACT THAT the means for spreading said substance comprise a groove (400) made in said face (44) of said cutting blade (9), a flexible grating (404) permeable to said substance (405) covering said groove and defining a space, and a spongy material (402) permeable to said substance (20) filling said space, said orifice (41, 42) opening out into said space.

fig .1

fig.2

fig.4

28 30 31 25

23

11

29

27

fig.3

49

46

48 39 52

45

9

23 25

44 42 50

41 43 47

29 11 27 40

fig.5

97

98

20

44

84

94 93

100 44 fig.6 95 13

4 39

99

9

10 87 6

3 92 83

fig.7

fig.8

fig.9

fig.10